# EUROPEAN PATENT SPECIFICATION

(11) **EP 0 970 760 B1**
(45) Date of publication and mention of the grant of the patent: **08.10.2003**
(21) Application number: 99850101.9
(22) Date of filing: 08.06.1999
(51) Int. Cl.: B08B 3/02

(54) **Process for cleaning endless movable belts of a sorting system and sorting system comprising a cleaning mechanism**
Verfahren zur Reinigung von laufenden Bändern in Sortiermaschinen und Sortiermaschine, die mit einer Vorrichtung zur Reinigung ausgestattet ist
Procédé pour le nettoyage de bandes en déplacement dans des machines de tri et machine de tri comportant un dispositif de nettoyage

(30) Priority: 12.06.1998 IT MI981343
(43) Date of publication of application: 12.01.2000
(73) Proprietor: Sandvik AB, 811 81 Sandviken (SE)
(72) Inventor: Tacchi, Renato, 21015 Lonate Pozzolo (VA) (IT); Marni, Fabio, 21051 Arcisate (VA) (IT)
(74) Representative: Taquist, Lennart

(56) References cited:
- EP-A- 0 771 745
- US-A- 2 881 463

## Description

This invention refers to a device for the cleaning and drying of rotating belts used in sorting machines for the carrying and unloading of items to be sorted.

The known devices comprise a supporting arm mounted on a mobile trolley sliding on a guide rail set parallel to the path of the trolleys and equipped with a first device designed to spray a liquid mixture, in particular water admixed with a detergent, and a second device placed downstream of the former in the direction of rotation of the belt, designed to aspirate the liquid from the surfaces for drying the belts.

Such devices allow cleaning the belts of the sorting machine in an entirely automatic manner, so as to perform this operation when the machine is out of production, for instance during the night hours.

The industrial sorting machine sector has in recent years witnessed the diffusion of high-technology sorting machines, in which the items are placed on a mobile trolley moving along a fixed path and equipped with a rotating belt, which constitutes the carrying and unloading plane for the items and is actuated so as to move in a direction perpendicular to that of the trolley's forward motion and to unload the carried item whenever the latter passes a pre-established collecting station.

These machines have attained a high degree of sophistication, to the point that the items are loaded onto the machine as it passes by at high speed, that their position on the belt is precisely adjusted and their unloading trajectory is calculated based on their mass, the forward speed of the machine and the belt's own friction coefficient, so as to achieve the unloading of the item with the greatest precision, while still maintaining a high forward speed of the trolleys.

The precision of the trajectories imparted to the items during the unloading process is of fundamental relevance for the proper operation of the apparatus. As mentioned, this precision also depends on the friction coefficient of the material constituting the belts.

During operation it happens, however, that the surface of these belts fouls up or turns shiny, with a consequent change of the friction coefficient which tends to reduce the characteristics of a precision handling of the items, for instance due to slipping phenomena which impair the reliability of the loading and unloading operations.

This makes it necessary to periodically attend to a cleaning of the belts by a washing operation, which is currently effected by hand, by shutting down the plant and individually cleaning the belts on each trolley.

EP 0 771 745 A1 discloses a process and apparatus for washing and making conveyor belts more hygienic wherein a belt is drawn through a box in which the belt is sprayed with steam. The belt is then sprayed with a water or detergent mixture. Next, the belt is drawn between bristles to detach dirt from the belt. Finally, the belt is drawn through a vacuum recess in which intake ducts are provided to suck away dirt removed from the belt. During a step to make the belt surface more hygienic, spraying of the water or detergent mixture is stopped and steam is supplied and then drawn away by the vacuum.

As can be easily seen, this is an extremely expensive operation, in particular if one considers that these fixtures are- frequently equipped with several hundreds of trolleys, and that the necessary cleaning operations therefore demand a machine outage of several hours.

The purpose of this invention is to offer a solution for the mentioned problem.

According to the invention, this problem is solved by the features of independent process claim 1 and independent apparatus claim 4.

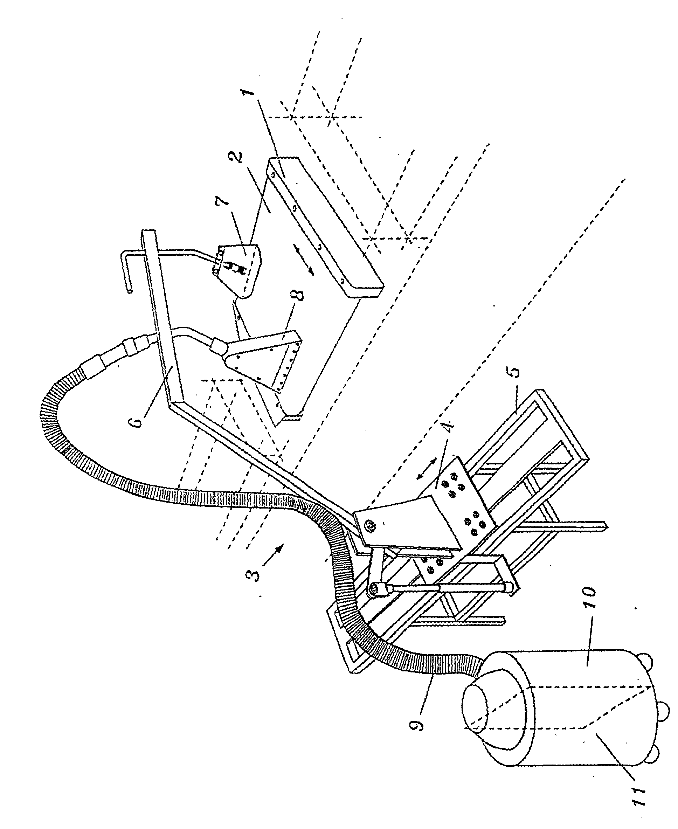

The apparatus for the cleaning of the belts according to the invention will now be described in detail, for exemplifying and non-limiting purposes, with reference to the enclosed drawing, which offers a simplified prospective view.

With reference to the attached drawing, 1 indicates the trolleys of a sorting machine, each of which carries a rotating belt 2 for the carrying and unloading of the items to be sorted.

The apparatus for the washing of the belts, indicated as an overall unit by the number 3, is set up on the left side of the machine, in a suitable area of the trolleys' forward path.

This apparatus comprises a mobile base 4 set on a pair of rails or guides 5 mounted parallel to the path of the machine and carrying a supporting arm 6. The arm 6 holds some devices 7 and 8, spaced out among each other in the direction of rotation of the belt, one capable of dispensing a liquid to clean the surface of the belt and the other of aspirating said liquid for the subsequent drying phase, respectively.

For example, the device 7 consists of a spraying nozzle connected by a flexible tube 9 to a tank 10 containing water and a detergent, while the device 8 consists of an aspirating mouth connected to a suction device of a known type, which discharges the aspirated liquid, through a second tube, to a collecting tank.

The tanks 10 an 11 may be separate or enclosed in a single container.

In a preferred embodiment the nozzle 7 and aspirating mouth 8 are capable of operating on a cross-section of the same width as the belt 2, so as to reduce its washing and drying times to a minimum.

According to another preferred embodiment, these devices are designed to operate on only a part of the width of the belt, so as to effect the cleaning operation in several stages, by shifting the base 4, from time to time and by the necessary length, along the guides 5.

The use of spray nozzles and aspirators of a size smaller than the width of the belts allows using devices of a smaller power rating.

The arm 6 may be mounted rigidly on the base 4, or fitted with devices capable of adjusting its inclination so as to approach the washing organs to or spread them apart from the surface of the belt.

According to a further preferred embodiment, the supporting arm may be fitted with three pairs of washing and aspirating devices, so as to be hold them side-by-side and to partially overlap in the operating area.

For exemplifying purposes, the operating cycle of an apparatus of the latter type will now be described.

Each of the washing devices may have a size of about 250 mm and therefore be capable of cleaning a strip of 150 mm width.

The three devices set side-by-side will therefore be capable of working efficiently on a belt of 45 cm length.

The cleaning cycle envisions the cleaning of one belt a time, while the belt rotates at a speed of about 20 cm per second.

For a standard-size belt, a time of 15 seconds can therefore be expected to spray the detergent liquid from one side and aspirating it from the other, plus an additional 7 seconds of aspirating time alone. Considering a total time of 6 seconds for approaching and detaching the arm, plus a time of about 12 seconds to move the fixture underneath the next trolley, a cycling time of about 40 seconds is achieved for the complete cleaning of the belt.

According to- the invention, the apparatus therefore allows to automatically perform the cleaning of the belts of an automatic sorting machine by exploiting its dead periods, for instance the night hours or weekends, while the machine is out of service.

An expert of the branch may envision numerous modifications and variants, all of which may however be considered to fall within the scope of the claims.

## Claims

1. A process for cleaning endlessly movable belts (2) of a sorting system, the sorting system comprising a plurality of mobile trolleys (1) movable along a predefined path for transporting items, each trolley (1) including an endless belt (2) having a belt upper section and a belt lower section, the belt being movable in a longitudinal belt direction perpendicularly to the predetermined path for receiving and discharging items, the belt upper section including opposite first and second ends spaced apart in the longitudinal belt direction, the method employing a cleaning mechanism (3) which includes a base (4) carrying an arm structure (6), a source of cleaning liquid (10), at least one dispensing device (7) mounted on the arm structure (6) and connected to the source of cleaning liquid (10) on the base (4), and at least one aspirating device (8) mounted on the arm structure (6) and connected to a source of suction pressure, the method comprising the steps of:
A. positioning the base (4) adjacent the predetermined path and spaced from a trolley (1) generally in the longitudinal belt direction, wherein the first end is closer to the base (4) than is the second end;
B. manipulating the arm structure (6) to position the at least one dispensing device (7) and the at least one aspirating device (8) in overlying relationship to an upper surface of the belt upper section, with the at least one dispensing device (7) disposed adjacent the first end, and the at least one aspirating device (8) disposed adjacent the second end;
C. rotating the belt (2) such that the upper surface moves in a direction from the first end toward the second end;
D. actuating the at least one dispensing device (7) to dispense cleaning liquid onto the moving upper surface;
E. actuating the at least one aspirating device (8) to aspirate dispensed cleaning liquid from the surface of the moving upper surface;
F. actuating the arm structure (6) to raise the at least one dispensing device (7) and the at least one aspirating device (8) at the end of a belt cleaning operation; and
G. producing relative movement between the trolleys (1) and the base (4) in a direction perpendicular to the longitudinal belt direction until the base (4) is disposed adjacent another trolley (1), and repeating steps B through F.

2. The process according to claim 1, further including the step of moving the at least one dispensing device (7) and the at least one aspirating device (8) relative to the belt (2) surface in a direction transversely of the longitudinal belt (2) direction subsequent to step C and prior to step F, to clean an entire width of the upper surface.

3. The process according to claim 1, wherein the arm structure (6) raises the at least one dispensing device (7) and the at least one aspirating device (8) together during step F,

4. A sorting system comprising:
a plurality of mobile trolleys (1) movable along a predefined path for transporting items, each trolley (1) including an endless belt (2) having a belt upper section and a belt lower section, the belt (2) being movable in a longitudinal belt direction perpendicularly to the predefined path for receiving and discharging the items, the belt upper section including opposite first and second ends spaced apart in the longitudinal belt direction; and
a cleaning mechanism (3) including:
a base (4) disposed adjacent the predetermined path and spaced from a trolley (1) generally in the longitudinal belt direction, wherein the first end is closer to the base (4) than is the second end, the base (4) carrying an arm structure (6) movable up and down,
a source of cleaning liquid (10) on the base,
at least one dispensing device (7) mounted on the arm structure (6) and connected to the source of cleaning liquid and arranged to overlie an upper surface of the belt upper section adjacent the first end thereof for dispensing cleaning liquid onto the upper surface,
a source of suction pressure, and
at least one aspirating device (8) mounted to the arm structure (6) and connected to the source of suction pressure, and arranged to overlie the upper surface adjacent the second end thereof in spaced relationship to the dispensing device (7) for sucking up dispensed cleaning liquid from the upper surface,
the base (4) and the trolleys (1) being relatively movable in a direction perpendicular to the longitudinal belt direction to relocate the base (4) relative to the trolleys (1).

5. The sorting system according to claim 4, further including means for raising or lowering the arm structure (6) to raise or lower the at least one dispensing device (7) and the at least one aspirating device (8) together.

6. The sorting system according to claim 5, wherein the arm structure (6) is mounted for pivotal movement about a horizontal axis.

7. The sorting system according to claim 4, wherein the cleaning mechanism (3) further includes a guide (5), the base (4) being mounted on the guide (5) and movable relative thereto in the direction perpendicular to the longitudinal belt direction.

## Patentansprüche

1. Verfahren zum Reinigen von endlos bewegbaren Bändern (2) eines Sortiersystems, welches eine Vielzahl von beweglichen Transportwagen (1) aufweist, die längs eines vorbestimmten Wegs zum Transportieren von Gegenständen bewegbar ist, wobei jeder Transportwagen (1) ein Endlosband (2) aufweist mit einem oberen Bandabschnitt und einem unteren Bandabschnitt, wobei das Band in einer Bandlängsrichtung senkrecht zu dem vorbestimmten Weg bewegbar ist für die Aufnahme und Abgabe von Gegenständen, der obere Bandabschnitt gegenüberliegende erste und zweite Enden aufweist, die in der Bandlängsrichtung im Abstand angeordnet sind, wobei das Verfahren eine Reinigungsvorrichtung (3) verwendet, die eine Basis (4), welche einen Armaufbau (6) trägt, eine Quelle für Reinigungsflüssigkeit (10), mindestens eine Spendeeinrichtung (7), die auf dem Armaufbau (6) montiert ist und mit der Quelle für Reinigungsflüssigkeit (10) auf der Basis (4) verbunden ist, und mindestens eine Ansaugvorrichtung (8) hat, die auf dem Armaufbau (6) angebracht und mit einer Quelle für Saugdruck verbunden ist, wobei das Verfahren folgende Schritte aufweist:
A. Positionieren der Basis (4) neben den vorbestimmten Weg und im Abstand von einem Transportwagen (1) im allgemeinen in Bandlängsrichtung, wobei das erste Ende dichter an der Basis (4) ist als das zweite Ende;
B. Betätigen des Armaufbaus (6) zum Positionieren der mindestens einen Spendereinrichtung (7) und der mindestens einen Ansaugvorrichtung (8) in eine Lage über einer oberen Fläche des oberen Bandabschnittes, wobei die mindestens eine Spendereinrichtung (7) neben dem ersten Ende angeordnet ist und die mindestens eine Ansaugvorrichtung (8) neben dem zweiten Ende angeordnet ist;
C. Rotieren des Bandes (2) derart, daß sich die obere Fläche in eine Richtung von dem ersten Ende zu dem zweiten Ende hin bewegt;
D. Betätigen der mindestens einen Spendereinrichtung (7) zur Lieferung von Reinigungsflüssigkeit auf die sich bewegende obere Fläche;
E. Betätigen der mindestens einen Ansaugvorrichtung (8) zum Ansaugen der gelieferten Reinigungsflüssigkeit von der Oberfläche der sich bewegenden oberen Fläche;
F. Betätigen des Armaufbaus (6) zum Anheben der mindestens einen Spendereinrichtung (7) und der mindestens einen Ansaugvorrichtung (8) am Ende eines Bandreinigungsbetriebes; und
G. Erzeugen einer Relativbewegen zwischen dem Transportwagen (1) und der Basis (4) in einer Richtung senkrecht zu der Bandlängsrichtung, bis die Basis (4) neben einem anderen Transportwagen (1) angeordnet ist, und Wiederholen der Schritte B bis F.

2. Verfahren nach Anspruch 1, ferner mit dem Schritt des Bewegens der mindestens einen Spendereinrichtung (7) und der mindestens einen Ansaugvorrichtung (8) relativ zu der Oberfläche des Bandes (2) in einer Richtung quer zu der Längsrichtung des Bandes (2) nach Schritt C und vor Schritt F, um eine Gesamtbreite der oberen Fläche zu reinigen.

3. Verfahren nach Anspruch 1, wobei der Armaufbau (6) die mindestens eine Spendereinrichtung (7) und die mindestens eine Ansaugvorrichtung (8) während des Schrittes F zusammen anhebt.

4. Sortiersystem mit:
einer Vielzahl von beweglichen Transportwagen (1), die längs eines vorbestimmten Weges bewegbar sind für das Transportieren von Gegenständen, wobei jeder Transportwagen (1) ein Endlosband (2) aufweist mit einem oberen Bandabschnitt und einem unteren Bandabschnitt, wobei das Band (2) in einer Bandlängsrichtung senkrecht zu dem vordefinierten Weg bewegbar ist, um die Gegenstände aufzunehmen und abzugeben, wobei der obere Bandabschnitt gegenüberliegende erste und zweite Enden aufweist, die in der Bandlängsrichtung im Abstand angeordnet sind; und
einer Reinigungsvorrichtung (3), die aufweist:
eine Basis (4), die neben dem vorbestimmten Weg angeordnet und von einem Transportwagen (1) im allgemeinen in der Bandlängsrichtung im Abstand angeordnet ist, wobei das erste Ende dichter an der Basis (4) ist als das zweite Ende, wobei die Basis (4) einen nach oben und unten bewegbaren Armaufbau (6) trägt,
eine Quelle für Reinigungsflüssigkeit (10) auf der Basis,
mindestens eine Spendereinrichtung (7), die auf dem Armaufbau (6) angebracht und mit der Quelle für Reinigungsflüssigkeit verbunden und so angeordnet ist, daß sie über einer oberen Fläche des oberen Bandabschnittes neben dessen erstem Ende liegt für die Lieferung von Reinigungsflüssigkeit auf die obere Fläche,
eine Quelle für Saugdruck und
mindestens eine Ansaugvorrichtung (8), die auf dem Armaufbau (6) angebracht und mit der Quelle für Saugdruck verbunden und so angeordnet ist, daß sie über der oberen Fläche neben deren zweitem Ende in Abstandslage über der Spendereinrichtung (7) liegt, um gelieferte Reinigungsflüssigkeit von der oberen Fläche aufzusaugen, wobei
die Basis (4) und der Transportwagen (1) in einer Richtung senkrecht zu der Bandlängsrichtung relativ bewegbar sind, um die Basis (4) relativ zu den Transportwagen (1) wieder zurückzubringen.

5. Sortiersystem nach Anspruch 4, ferner mit Mitteln zum Anheben und Absenken des Armaufbaues (6), um die mindestens eine Spendereinrichtung (7) und die mindestens eine Ansaugvorrichtung (8) zusammen anzuheben oder abzusenken.

6. Sortiersystem nach Anspruch 5, wobei der Armaufbau (6) für die Schwenkbewegung um eine horizontale Achse angebracht ist.

7. Sortiersystem nach Anspruch 4, wobei die Reinigungsvorrichtung ferner eine Führung (5) aufweist und die Basis (4) auf der Führung (5) montiert und relativ dazu in Richtung senkrecht zu der Bandlängsrichtung bewegbar ist.

## Revendications

1. Procédé destiné à nettoyer des courroies mobiles sans fin (2) d'un système de tri, le système de tri comprenant une pluralité de chariots mobiles (1) pouvant se déplacer suivant un trajet prédéfini afin de transporter des articles, chaque chariot (1) comprenant une courroie sans fin (2) comportant une section supérieure de courroie et une section inférieure de courroie, la courroie étant mobile dans une direction de courroie longitudinale perpendiculairement au trajet prédéterminé afin de recevoir et décharger les articles, la section supérieure de courroie comprenant des première et seconde extrémités opposées espacées dans la direction de courroie longitudinale, le procédé employant un mécanisme de nettoyage (3) qui comprend une base (4) supportant une structure de bras (6), une source de liquide de nettoyage (10), au moins un dispositif de délivrance (7) monté sur la structure de bras (6) et relié à la source du liquide de nettoyage (10) sur la base (4), et au moins un dispositif d'aspiration (8) monté sur la structure de bras (6) et relié à une source de pression d'aspiration, le procédé comprenant les étapes consistant à :
A. positionner la base (4) de façon adjacente au trajet prédéterminé et à l'écart du chariot (1), généralement dans la direction de courroie longitudinale, où la première extrémité est plus proche de la base (4) que ne l'est la seconde extrémité,
B. manipuler la structure de bras (6) pour positionner le au moins un dispositif de délivrance (7) et le au moins un dispositif d'aspiration (8) suivant une relation de recouvrement sur une surface supérieure de la section supérieure de courroie, le au moins un dispositif de délivrance (7) étant disposé de façon adjacente à la première extrémité, et le au moins un dispositif d'aspiration (8) étant disposé de façon adjacente à la seconde extrémité,
C. entraîner en rotation la courroie (2) de sorte que la surface supérieure se déplace dans une direction allant de la première extrémité vers la seconde extrémité,
D. actionner le au moins un dispositif de délivrance (7) afin de délivrer du liquide de nettoyage sur la surface supérieure en mouvement,
E. actionner le au moins un dispositif d'aspiration (8) pour aspirer le liquide de nettoyage délivré de la surface de la surface supérieure en mouvement,
F. actionner la structure de bras (6) pour relever le au moins un dispositif de délivrance (7) et le au moins un dispositif d'aspiration (8) à la fin d'une opération de nettoyage de la courroie, et
G. produire un déplacement relatif entre les chariots (1) et la base (4) dans une direction perpendiculaire à la direction de courroie longitudinale jusqu'à ce que la base (4) soit disposée de façon adjacente à un autre chariot (1), et répéter les étapes B à F.

2. Procédé selon la revendication 1, comprenant en outre l'étape consistant à déplacer le au moins un dispositif de délivrance (7) et le au moins un dispositif d'aspiration (8) par rapport à la surface de la courroie (2) dans une direction transversale à la direction de la courroie (2) longitudinale après l'étape C et avant l'étape F, afin de nettoyer une largeur entière de la surface supérieure.

3. Procédé selon la revendication 1, dans lequel la structure de bras (6) relève le au moins un dispositif de délivrance (7) et le au moins un dispositif d'aspiration (8) durant l'étape F.

4. Système de tri comprenant :
une pluralité de chariots mobiles (1) pouvant se déplacer suivant un trajet prédéfini afin de transporter des articles, chaque chariot (1) comprenant une courroie sans fin (2) comportant une section supérieure de courroie et une section inférieure de courroie, la courroie (2) étant mobile dans une direction de courroie longitudinale perpendiculaire au trajet prédéfini en vue de recevoir et de décharger les articles, la section supérieure de courroie comprenant des première et seconde extrémités opposées espacées dans la direction de courroie longitudinale, et
un mécanisme de nettoyage (3) comprenant :
une base (4) disposée de façon adjacente au trajet prédéterminé et espacée d'un chariot (1) généralement dans la direction de courroie longitudinale, où la première extrémité est plus proche de la base (4) que ne l'est la seconde extrémité, la base (4) supportant une structure de bras (6) pouvant se déplacer vers le haut et vers le bas,
une source de liquide de nettoyage (10) sur la base,
au moins un dispositif de délivrance (7) monté sur la structure de bras (6) et relié à la source du liquide de nettoyage et agencé pour recouvrir une surface supérieure de la section supérieure de courroie adjacente à la première extrémité de celle-ci afin de distribuer du liquide de nettoyage sur la surface supérieure,
une source de pression d'aspiration, et
au moins un dispositif d'aspiration (8) monté sur la structure de bras (6) et relié à la source de pression d'aspiration, et agencé pour recouvrir la surface supérieure adjacente à la seconde extrémité de celle-ci suivant une relation espacée par rapport au dispositif de délivrance (7) afin d'aspirer du liquide de nettoyage délivré de la surface supérieure,
la base (4) et les chariots (1) étant relativement mobiles dans une direction perpendiculaire à la direction de courroie longitudinale pour repositionner la base (4) par rapport aux chariots (1).

5. Système de tri selon la revendication 4, comprenant en outre un moyen destiné à relever ou abaisser la structure de bras (6) pour relever ou abaisser le au moins un dispositif de délivrance (7) et le au moins un dispositif d'aspiration (8) ensemble.

6. Système de tri selon la revendication 5, dans lequel la structure de bras (6) est montée en vue d'un déplacement en pivotement autour d'un axe horizontal.

7. Système de tri selon la revendication 4, dans lequel le mécanisme de nettoyage (3) comprend en outre un guide (5), la base (4) étant montée sur le guide (5) et étant mobile par rapport à celui-ci dans la direction perpendiculaire à la direction de courroie longitudinale.
